# EUROPÄISCHE PATENTSCHRIFT

(11) **EP 3 639 946 B1**
(45) Veröffentlichungstag und Bekanntmachung des Hinweises auf die Patenterteilung: **06.11.2024**
(21) Anmeldenummer: 19198941.7
(22) Anmeldetag: 23.09.2019
(51) Int. Cl.: B21J 5/12, B21K 5/10, B23P 15/32, B21J 7/14, B21J 13/02

(54) **VERFAHREN UND VORRICHTUNG ZU SEINER HERSTELLUNG EINES VERBINDUNGSELEMENTS**
METHOD AND DEVICE FOR PRODUCING A CONNECTING ELEMENT
PROCÉDÉ ET DISPOSITIF DE FABRICATION D'UN ÉLÉMENT DE RACCORDEMENT

(30) Priorität: 19.10.2018 DE 102018126086
(43) Veröffentlichungstag der Anmeldung: 22.04.2020
(73) Patentinhaber: Mac Panther GmbH, 28199 Bremen (DE)
(72) Erfinder: Kleine, Michael, 28832 Achim (DE); Kleine, Dr. Andreas, 28199 Bremen (DE)
(74) Vertreter: Eisenführ Speiser

(56) Entgegenhaltungen:
- EP-A1- 2 839 900
- EP-A2- 2 641 673
- DE-A1- 102010 018 791
- US-A- 5 557 962

## Beschreibung

Die Erfindung betrifft ein Verfahren zur Herstellung eines mit einer Endfläche versehenen stangen- oder rohrförmigen Verbindungselementes aus einem Verbindungselementhalbzeug aus Metall, insbesondere eines axialbeweglich in einer Werkzeugaufnahme eines Bohrhammers befestigten Einsteckendes eines Bohrers oder Meißels. Die Erfindung betrifft weiterhin eine Vorrichtung zur Fertigung eines Verbindungselementes aus einem Verbindungselementhalbzeug, insbesondere eines axial-beweglich in einer Werkzeugaufnahme eines Bohrhammers befestigten Einsteckendes eines Bohrers oder Meißels.

Verfahren und Vorrichtungen der eingangs genannten Art sind aus dem Stand der Technik bekannt. Beispielsweise zeigen die EP 2 458 131 A2, die EP 2 361 702 A1 und die EP 2 839 900 A1 Verfahren und Vorrichtungen der eingangs genannten Art.

Eine Aufgabe der vorliegenden Erfindung ist es, Verfahren und/oder Vorrichtungen der eingangs genannten Art zu verbessern.

Diese Aufgabe wird durch den Gegenstand des unabhängigen Verfahrensanspruchs 1 bzw. durch den Gegenstand des unabhängigen Vorrichtungsanspruchs 8 gelöst. Bevorzugte Ausführungsformen der vorliegenden Erfindung sind in den abhängigen Ansprüche definiert.

Die vorliegende Erfindung umfasst die Erkenntnis, dass die aus dem eingangs genannten Stand der Technik bekannten Verfahren nachteilig sind. Insbesondere hat die Erfindung erkannt, dass in dem Stand der Technik der EP 2 839 900 A1 beidseitig geschlossene Längsnuten durch radial bewegliche Umformkörper eingeformt werden, indem Umformkörper verwendet werden, deren Länge jeweils der Länge der einzuformenden Längsnuten entspricht. In diesem Zusammenhang hat die vorliegende Erfindung erkannt, dass zur Herstellung eines handelsüblichen Bohrers mit dem vorgenannten Verfahren des Standes der Technik etwa 80 Tonnen Presskraft benötigt werden, um die Umformkörper in das Bohrerhalbzeug einzudrücken. Hierdurch kommt es zu einer ganz erheblichen, unerwünschten Überbelastung von Matrizen und der die Matrizen aufweisenden Maschine insgesamt. Darüber hinaus muss die Maschine für derartig enorme Umformkräfte überhaupt erst einmal ausgelegt werden. Dem entsprechend teuer aber auch langsam sind diese Maschinen.

Ein Vorteil der vorliegenden Erfindung liegt insbesondere darin, dass durch die Verkleinerung einer Längserstreckung des in der Matrize geführten, radial beweglichen Umformkörpers zum Einformen der Längsnut auf ein Maß, welches geringer ist als die parallel gemessene Längserstreckung der gewünschten Längsnut, für das radiale Eintauchen des mindestens einen Umformkörpers deutlich geringere Kräfte benötigt werden. Unter Längserstreckung wird in diesem Zusammenhang die Längserstreckung in Richtung der Längsachse des Verbindungselementhalbzeugs verstanden. Die Längserstreckung des Umformkörpers ist dabei im Wesentlichen unabhängig von der Länge der beidseitig geschlossenen Längsnut. Die Längserstreckung des Umformkörpers wird bevorzugt gewählt in Abhängigkeit von der aufzubringenden Kraft für die axiale Verschiebung des Elementes, welche wiederum im Wesentlichen von der Breite und der Tiefe der Längsnut bestimmt wird. Die Erfindung hat hier beispielsweise festgestellt, dass die notwendigen Kräfte zum radialen Eintauchen des mindestens einen Umformkörpers in das Verbindungselementhalbzeug bei nur noch etwa 12 Tonnen liegen. Gleichzeitig hat die Erfindung festgestellt, dass durch das erfindungsgemäß anschließende axiale Verschieben des Verbindungselementhalbzeugs in einer Matrizenlängsöffnung der Matrize zum Einbringen bzw. vervollständigen der mindestens einen Längsnut ebenfalls nur geringe Verschiebekräfte erfordert. So hat die Erfindung beispielsweise festgestellt, dass für das axiale Verschieben des Verbindungselementes zum Einbringen bzw. vervollständigen der Längsnut nur etwa 14 Tonnen benötigt werden. Nach Erreichen der geplanten Länge der Längsnut wird der Verschiebevorgang unterbrochen und der radial zugestellte Umformkörper wieder radial zurückgezogen. Insgesamt ermöglicht es die vorliegende Erfindung daher vorteilhaft, dass deutlich geringere Kräfte benötigt werden, was vorteilhaft dazu führt, dass deutlich kleinere und einfachere Maschinen ausreichend sind, und auch ein deutlich geringerer Matrizenverschleiß und damit insgesamt deutlich geringere Kosten zur Herstellung entsprechender Verbindungselemente erforderlich sind.

Eine bevorzugte Ausführungsform der Erfindung zeichnet sich dadurch aus, dass die Längserstreckung des mindestens einen radial beweglichen Umformkörpers bevorzugt das ein- bis dreifache einer lateral zu ihrer Längserstreckung gemessenen Breite der mindestens einen beidseitig geschlossenen Längsnut beträgt. Die Längserstreckung des Umformkörpers ist dabei im Wesentlichen unabhängig von der Länge der beidseitig geschlossenen Längsnut. Die Längserstreckung des Umformkörpers wird bevorzugt gewählt in Abhängigkeit von der aufzubringenden Kraft für die axiale Verschiebung des Elementes, welche wiederum im Wesentlichen von der Breite und der Tiefe der Längsnut im Wesentlichen bestimmt wird.

Eine bevorzugte Ausführungsform der Erfindung zeichnet sich dadurch aus, dass die Matrize eine Innenkontur aufweist, welche mit mindestens einer geplanten Drehmitnahmefläche des Verbindungselementes korrespondiert und diese mindestens eine Drehmitnahmefläche durch Einführen des Verbindungselementhalbzeugs in die Matrize unter Kraft in Richtung einer Längsachse der Matrize in das Verbindungselementhalbzeug eingeformt wird und die mindestens eine beidseitig geschlossene Längsnut durch radiales Zustellen des mindestens einen in der Matrize beweglichen Umformkörpers und folgender Axialbewegung in Richtung der Längsachse der Matrize in das Verbindungselementhalbzeug eingeprägt wird. Besonders vorteilhaft ist es hierbei, dass nur eine einzige Matrize zur Herstellung sowohl der Drehmitnahmeflächen als auch der Längsnuten ausreichend ist. Zugleich werden nur geringe Umformkräfte benötigt, da auch die Drehmitnahmeflächen durch Einführen des Verbindungselementhalbzeugs in die Matrize unter Kraft in Richtung einer Längsachse der Matrize eingeformt werden. Bei dieser Ausführungsform wird daher der erfindungsgemäße Gedanken, die radial notwendigen Einformkräfte zu verringern, indem ein Teil der Arbeit zum Einbringen der Längsnut bzw. der Drehmitnahmefläche durch axiales Verschieben des Verbindungselementhalbzeugs in einer Matrizenlängsöffnung der Matrize erfolgt, weiter fortgebildet.

Eine bevorzugte Ausführungsform der Erfindung zeichnet sich dadurch aus, dass das Einprägen der mindestens einen oder mehreren beidseitig geschlossenen Längsnuten während des Einformens der mindestens einen Drehmitnahmefläche erfolgt, vorzugsweise indem der mindestens eine radial bewegliche Umformkörper einen, bezogen auf die Matrizenlängsachse, axialen Versatz aufweist gegenüber einem Vorderende mindestens eines der in der Matrize angeordneten Umformelemente für die mindestens eine Drehmitnahmefläche. Durch die eine an die vorhandenen Größenverhältnisse angepasste Wahl des Versatzes kann ohne Zwischenstopp in einer kontinuierlichen Längsbewegung das gleichzeitige Einformen der Drehmitnahmefläche und der beidseitig geschlossenen Längsnut vorgenommen werden, was die Steuerung der Umformmaschine erheblich vereinfacht.

Eine bevorzugte Ausführungsform der Erfindung zeichnet sich dadurch aus, dass das Einprägen der mindestens einen beidseitig geschlossenen Längsnut nach Beendigung des Einformens der mindestens einen Drehmitnahmefläche mit dem radialen Zustellen des mindestens einen beweglichen Umformkörpers beginnt und durch ein Ausschieben des Verbindungselementhalbzeugs aus der Matrizenlängsöffnung unter einer axial wirkenden Kraft fortgesetzt und/oder beendet wird. Diese Ausführungsform bietet den zusätzlichen Vorteil, dass beim Einschieben des Verbindungselementhalbzeugs in die Matrize nur die Kraft zur Einformung der mindestens einen Drehmitnahmefläche und beim Ausschieben nur die Kraft zur Einformung der mindestens einen beidseitig geschlossenen Längsnut benötigt wird, so dass bei dieser Ausführungsform die insgesamt maximal benötige Axialkraft annähernd halbiert wird. Auf diese Weise wird bei dieser Ausführungsform die Belastung für die Matrizen und auch insgesamt für die Maschine noch weiter reduziert. Zugleich und besonders vorteilhaft wird darüber hinaus eine kurze Taktzeit bei der Herstellung der erfindungsgemäßen Verbindungselemente ermöglicht, so dass insgesamt die Produktionsgeschwindigkeit vorteilhaft erhöht wird. Hierdurch erfolgt außerdem vorteilhaft ein Nachkalibrieren der vorher geformten Drehmitnahmeflächen.

Eine bevorzugte Ausführungsform der Erfindung zeichnet sich dadurch aus, dass bei einem rohrförmigen, einen Rohrinnenhohlraum mit einem Rohrinnenquerschnitt aufweisendem Verbindungselementhalbzeug im Bereich der mindestens einen geplanten Drehmitnahmefläche und der mindestens einen geplanten beidseitig geschlossenen Längsnut der Rohrinnenquerschnitt durch das Einbringen der Drehmitnahmeflächen verkleinert oder geschlossen wird, weiter bevorzugt oder alternativ wird der Rohrinnenquerschnitt durch vorheriges Einführen eines entlang seiner Längsachse mit Querschnittsänderungen profilierten Innenstiftes reduziert oder geschlossen.

Die Erfindung hat in diesem Zusammenhang erkannt, dass rohrförmige, einen Rohrinnenhohlraum mit einen Rohrinnenquerschnitt aufweisende Verbindungselementhalbzeuge vor allem zur Herstellung von Saugbohrern verwendet werden. Derartige Saugbohrer werden bevorzugt aus massiven Rundstahl gefertigt. Der einen Rohrinnenquerschnitt aufweisende Rohrinnenhohlraum, der die eigentliche Saugbohrung bildet, wird bevorzugt durch Tieflochbohren erzeugt. Die Erfindung hat in diesem Zusammenhang erkannt, dass dieses Tieflochbohren nicht nur sehr teuer ist, sondern vor allem wegen häufig auftretender Riefenbildung am Bohrungsgrund auch qualitativ nachteilig ist. Es kommt dadurch häufig zu Ausschuss, so dass insgesamt der Preis derartig hergestellter Saugbohrer sehr hoch ist, was der allgemeinen Verbreitung derartiger Saugbohrer entgegensteht. Durch die erfindungsgemäße Verwendung eines rohrförmigen Verbindungselementhalbzeugs, also beispielsweise eines bevorzugt dickwandigen Rohrabschnitts, werden diese Nachteile erfindungsgemäß vermieden. Insbesondere wird bei dieser Ausführungsform der Erfindung bevorzugt das Hinterende des Bohrers geschlossen, so dass die Schlagenergie auf dieses massive Hinterende übertragen werden kann und zugleich die Absaugung mit einem gemäß dieser Ausführungsform hergestellten Saugbohrer weiterhin - wie auch bei aus dem Stand der Technik bekannten Saugbohrern - vor dem Einsteckende erfolgt.

Eine bevorzugte Ausführungsform der Erfindung zeichnet sich dadurch aus, dass die Matrize in Längsrichtung mindestens einmal geteilt ist und die Matrizenhälften bzw. -teile beim Auswerfen geringfügig im Verhältnis zu einem Durchmesser des Verbindungselementes beabstandet werden. Die Vorteile dieser Ausführungsform liegen insbesondere darin, dass durch die leichte, d.h. im Verhältnis zu einem Durchmesser des Verbindungselementes geringfügige Beabstandung der durch die Teilung der Matrize in Längsrichtung gebildeten Matrizenhälften die beim Ausschieben des Verbindungselementes aus der Matrize benötigten Kräfte reduziert werden.

Eine bevorzugte Ausführungsform der erfindungsgemäßen Vorrichtung zur Fertigung eines Verbindungselements zeichnet sich dadurch aus, dass eine weitere Matrize und ein in einer Matrizenlängsöffnung der Matrize wirkender Pressstempel zur Einformung mindestens einer Drehmitnahmefläche in das Verbindungselementhalbzeug vorgesehen ist.

Eine weitere bevorzugte Ausführungsform der erfindungsgemäßen Fertigungsvorrichtung zeichnet sich dadurch aus, dass beidseitig in Verlängerung der Matrizenlängsöffnung jeweils ein Pressstempel angeordnet ist, ein erster Pressstempel ist zum Einformen der mindestens einen Drehmitnahmefläche bei einem Einführen des Verbindungselementhalbzeugs in die Matrize, und ein zweiter Pressstempel auf einer dem ersten Pressstempel gegenüberliegenden Auswerferseite zum Einformen der mindestens einen beidseitig geschlossenen Längsnut des Verbindungselementes bei einem Ausschieben des Verbindungselementhalbzeugs aus der Matrize. Diese Ausführungsform der erfindungsgemäßen Fertigungsvorrichtung stellt eine besonders wirtschaftliche und technisch einfache Ausführungsform dar, da diese Vorrichtung geeignete Pressstempel auf beiden Seiten der Matrize zum Bewegen des Verbindungselementhalbzeugs in der Matrize aufweist, wodurch beim Einführen des Verbindungselementhalbzeugs in die Matrize und auch beim Ausschieben oder Auswerfen des Verbindungselementhalbzeugs aus der Matrize Einformungen in das Verbindungselementhalbzeug zur Herstellung des gewünschten Verbindungselementes vorgenommen werden können.

Eine weitere bevorzugte Ausführungsform der erfindungsgemäßen Fertigungsvorrichtung zeichnet sich dadurch aus, dass außerhalb der Matrize und vorzugsweise annähernd rechtwinklig zu der Matrizenlängsöffnung mindestens ein Keil angeordnet ist, der zum Einpressen der beidseitig geschlossenen Längsnuten auf den mindestens einen radial beweglichen Umformkörper drückt. Ein Vorteil dieser bevorzugten Anordnung der Keile liegt insbesondere darin, dass dadurch eine besonders kompakte Bauweise der erfindungsgemäßen Fertigungsvorrichtung zur Verfügung gestellt wird.

Eine weitere bevorzugte Ausführungsformen der erfindungsgemäßen Fertigungsvorrichtung zeichnet sich dadurch aus, dass der mindestens eine Keil als Innennockenfläche in einer konzentrisch zur Matrize drehbar gelagerten Hülse angearbeitet ist und durch Verdrehung der Hülse die Kraft zum Einformen der beidseitig geschlossenen Längsnuten auf den mindestens einen radialbeweglichen Umformkörper aufgebracht wird. Ein Vorteil dieser bevorzugten Ausführungsform der erfindungsgemäßen Vorrichtung liegt insbesondere darin, dass durch diese Anordnung der konzentrisch zur Matrize drehbar gelagerten Hülse eine besonders kompakte Bauweise der erfindungsgemäßen Fertigungsvorrichtung zur Verfügung gestellt wird.

Weitere bevorzugte Ausführungsform der Erfindung sind in den Unteransprüchen angegeben.

Im Folgenden werden bevorzugte Ausführungsformen der Erfindung anhand der Zeichnungen beschrieben. Gleiche oder funktionsgleiche Teile oder Verfahrensschritte sind mit denselben Bezugszeichen bezeichnet. Die Zeichnungen zeigen:
- Figur 1: zeigt ein nicht erfindungsgemäßes Verbindungselementhalbzeug zur Verwendung in den erfindungsgemäßen Verfahren bzw. Vorrichtungen in einer perspektivischen Ansicht und in einer Seitenansicht;
- Figur 2: zeigt eine perspektivische Ansicht eines nicht erfindungsgemäßen Verbindungselementes;
- Figur 3: zeigt eine perspektivische Ansicht eines nicht erfindungsgemäßen Verbindungselementes;
- Figur 4: zeigt die Detailansicht A der Figur 2;
- Figur 5: zeigt eine teilweise Draufsicht auf das Verbindungselement der Figur 2;
- Figur 6: zeigt eine Schnittansicht gemäß der in Figur 5 dargestellten Schnittlinie C-C;
- Figur 7: zeigt eine Schnittansicht gemäß der in Figur 5 dargestellten Schnittlinie B-B;
- Figur 8: zeigt die Detailansicht A der zweiten Ausführungsform des Verbindungselementes gemäß Figur 3;
- Figur 9: zeigt eine teilweise Draufsicht auf das Verbindungselement der zweiten Ausführungsform gemäß Figur 3;
- Figur 10: zeigt eine Schnittansicht gemäß der in Figur 9 dargestellten Schnittlinie B-B;
- Figur 11: zeigt eine Schnittansicht gemäß der in Figur 9 dargestellten Schnittlinie C-C;
- Figur 12: zeigt eine erste Ausführungsform einer erfindungsgemäßen Vorrichtung zur Fertigung eines Verbindungselementes aus einem Verbindungselementhalbzeug;
- Figur 13: zeigt die Ausführungsform der Fig. 12 zu einem späteren Zeitpunkt;
- Figur 14: einen Querschnitt durch eine dritte Ausführungsform einer erfindungsgemäßen Vorrichtung zur Fertigung eines Verbindungselementes aus einem Verbindungselementhalbzeug;
- Figur 15: zeigt einen Längsschnitt der Ausführungsform der Figur 14; und
- Figur 16: zeigt eine perspektivische Ansicht der Ausführungsform der Figur 14.

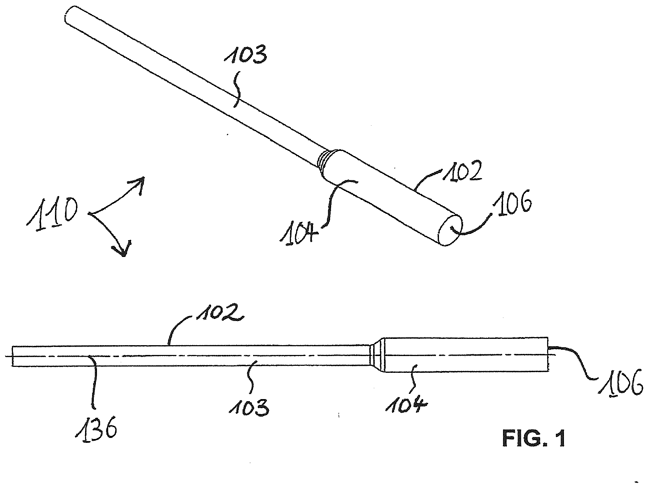

Figur 1 zeigt ein Verbindungselementhalbzeug 102 zur Verwendung in den erfindungsgemäßen Verfahren bzw. Vorrichtungen in einer perspektivischen Ansicht und in einer Seitenansicht. Das in Figur 1 dargestellte Verbindungshalbzeug 102 besteht aus Metall. Das Verbindungelementhalbzeug 102 ist insgesamt als zylinderförmige Stange ausgebildet. Alternativ, jedoch nicht dargestellt, kann das Verbindungselementhalbzeug 102 auch als zylinderförmiges Rohr ausgebildet sein. Das Halbzeug 102 weist einen in der Figur 1 jeweils links dargestellten Abschnitt 103 mit geringerem Durchmesser auf und einen in der Figur 1 jeweils rechts dargestellten Abschnitt 104 mit im Vergleich zu dem Durchmesser des Abschnittes 103 etwa doppelt so großen Durchmesser auf, wobei es für die vorliegende Erfindung auf die Durchmesserunterschiede zwischen den Abschnitten 103 und 104 nicht ankommt. Weiterhin weist das Halbzeug 102 an seinem dem dünneren Abschnitt 103 abgewandten Ende eine Endfläche 106 auf. Figur 1 zeigt den Rohzustand 110 des Halbzeugs 102 vor dem Einprägen einer Längsnut oder einer Drehmitnahmefläche im Abschnitt 104. Die in Figur 1 in der Seitenansicht des Halbzeugs 102 zur erkennende gestrichelte Linie 136 zeigt die Längsachse des Halbzeugs 102.

Das Verbindungselementhalbzeug 102 der Figur 1 kann auch als rohrförmiges Halbzeug 102 ausgebildet sein. In einem solchen Fall findet sich in dem Halbzeug 102 ein konzentrisch zur Längsachse 136 verlaufender Rohrinnenhohlraum mit einem gewünschten Rohrinnenquerschnitt (nicht dargestellt). Derartige Halbzeuge finden beispielsweise bei Saugbohrern Verwendung.

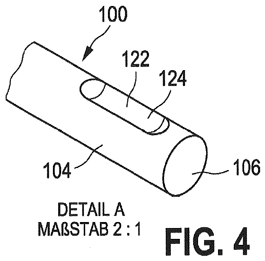

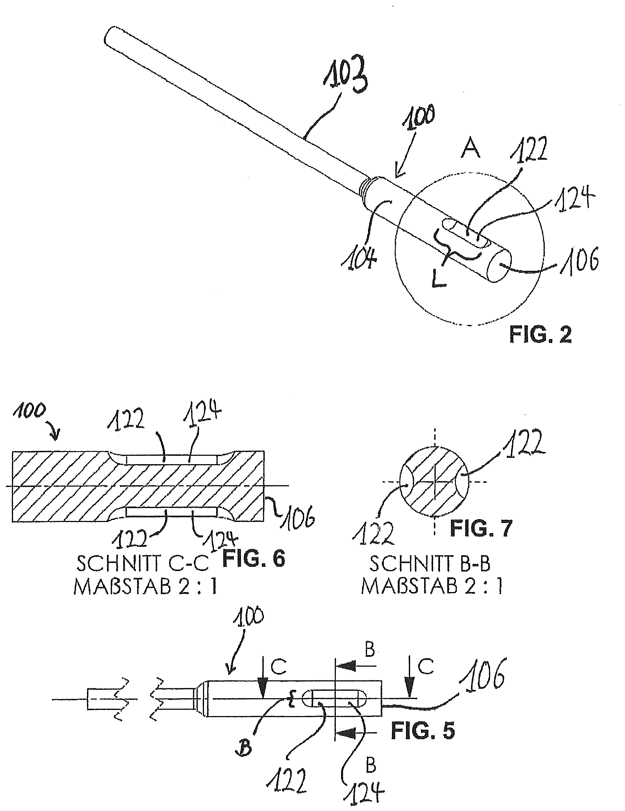

Figur 2 zeigt eine perspektivische Ansicht eines Verbindungselementes gemäß einer ersten Ausführungsform. Figur 2 zeigt im Bereich des Abschnitts 104 ein aus dem Verbindungselementhalbzeug 102 der Figur 1 hergestelltes, mit einer Endfläche 106 versehenes stangenförmiges Verbindungselement 100 aus Metall. Die in Figur 2 dargestellte erste Ausführungsform des Verbindungselementes 100 stellt ein axial beweglich in einer Werkzeugaufnahme eines Bohrhammers befestigtes Einsteckende eines Bohrers oder Meißels dar. Das in dem zylinderförmigen Abschnitt 104 liegende Verbindungselement 100, welches mit Bezug auf die Figuren 4-7 noch genauer beschrieben wird, weist zwei sich auf dem Umfang des Abschnitts 104 gegenüberliegende, beidseitig geschlossene Längsnuten 122 auf. Die Längsnuten 122 weisen eine geplante Länge L auf. Die Längsnuten 122 dienen in der dargestellten Ausführungsform als Verriegelungsnuten 124.

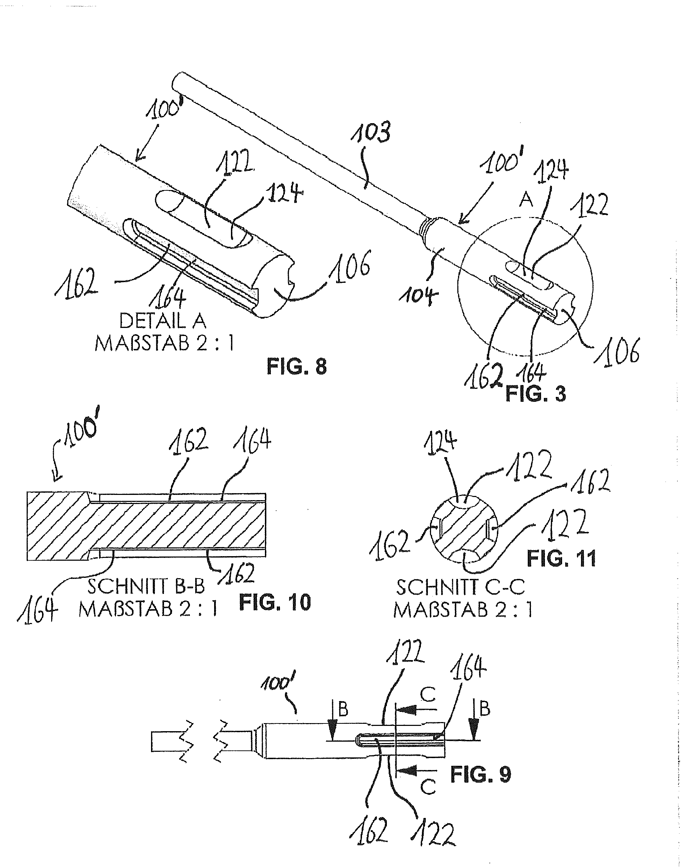

Figur 3 zeigt eine perspektivische Ansicht eines Verbindungselementes gemäß einer zweiten Ausführungsform. Die in Figur 3 dargestellte zweite Ausführungsform eines erfindungsgemäßen Verbindungselementes 100` wird unten mit Bezug auf die Figuren 8-11 genauer beschrieben. Der wesentliche Unterschied der zweiten Ausführungsform des Verbindungselementes 100` zum Verbindungselement 100 der Figuren 2 und 4-7 ist, dass zwei - von den Längsnuten 122 in einem rechten Winkel entlang der Umfangsrichtung des Umfangs des Abschnitts 104 beabstandete - zwei sich ebenfalls auf dem Umfang des Abschnitts 104 gegenüberliegende, zur Endfläche 106 hin offene, in der dargestellten Ausführungsform der Figuren 3 und 8-11 als im Wesentlichen U-förmige Nuten 162 ausgebildete Drehmitnahmeflächen 164 eingeformt bzw. eingeprägt sind.

Figur 4 zeigt die Detailansicht A der Figur 2.

Figur 5 zeigt eine Draufsicht auf das Verbindungselement 100 der Figur 2.

Figur 6 zeigt eine Schnittansicht durch das Verbindungselement 100 gemäß der in Figur 5 dargestellten Schnittlinie C-C.

Figur 7 zeigt eine Schnittansicht durch das Verbindungselement 100 gemäß der in Figur 5 dargestellten Schnittlinie B-B.

Figur 8 zeigt die Detailansicht A der zweiten Ausführungsform des Verbindungselementes 100' gemäß Figur 3.

Figur 9 zeigt eine teilweise Draufsicht auf das Verbindungselement 100' der zweiten Ausführungsform gemäß Figur 3.

Figur 10 zeigt eine Schnittansicht durch das Verbindungselement 100' gemäß der in Figur 9 dargestellten Schnittlinie B-B.

Figur 11 zeigt eine Schnittansicht durch das Verbindungselement 100' gemäß der in Figur 9 dargestellten Schnittlinie C-C.

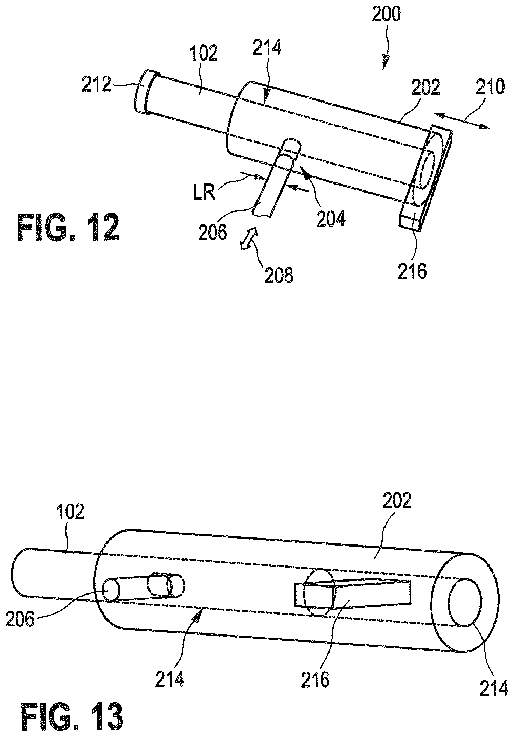

Figur 12 zeigt eine erste Ausführungsform einer erfindungsgemäßen Vorrichtung 200 zur Fertigung eines Verbindungselementes 100 aus einem Verbindungselementhalbzeug 102, insbesondere zur Fertigung eines axial beweglich in einer Werkzeugaufnahme eines Bohrhammers befestigten Einsteckendes eines Bohrers oder Meißels. Die Vorrichtung 200 weist eine Matrize 202 mit einer Innenkontur auf. Die Innenkontur korrespondiert mit mindestens einer geplanten Drehmitnahmefläche 162 des Verbindungselementes 100`. Die Matrize 202 weist einen zumindest radial beweglichen und in einer Aussparung 204 der Matrize 202 angeordneten Umformkörper 206 auf. In der dargestellten Ausführungsform der Figur 12 ist der Umformkörper 206 als gemäß Doppelpfeil 208 radial in Richtung auf das Verbindungselementhalbzeug 102 zustellbarer und zurückstellbarer Rundnutstempel ausgebildet. Der als Umformkörper dienende Rundnutstempel 206 dient zum Einformen mindestens einer beidseitig geschlossenen Längsnut 122 in das Halbzeug 102. Eine parallel zur Längsachse des Halbzeugs 102 bzw. parallel zum Doppelpfeil 210 der Figur 12 gemessene Länge LR ist kleiner als die geplante Länge L der Längsnut 122 gemäß Figur 2. In dem dargestellten Ausführungsbeispiel der Figur 12 entspricht die Länge LR des Rundnutstempels 206 dem Durchmesser des Rundnutstempels 206, da dieser einen kreisförmigen Querschnitt aufweist. Bevorzugt beträgt der Durchmesser LR des Rundnutstempels 206 bzw. die parallel zum Pfeil 210 gemessene Länge LR des Umformkörpers 206 etwa zwischen dem einfachen und dem dreifachen der Breite der Längsnut 122 und weniger als 30 % der geplanten Länge L der Längsnut 122 gemäß Figur 2.

Mittels der Vorrichtung 200 der Figur 12 erfolgt die Einformung einer Längsnut 122 gemäß Figur 2 in das Halbzeug 102 durch radiales Zustellen des Umformkörpers 206 und anschließendes axiales Verschieben des Verbindungselementhalbzeugs 102 in einer an den Außenumfang des Halbzeugs 102 angepassten Matrizenlängsöffnung 214 der Matrize 202 gemäß Pfeil 210. Die Längserstreckung LR des als radial beweglicher Umformkörper dienenden Rundnutstempels 206 beträgt bevorzugt das ein- bis dreifache einer in Figur 5 dargestellten Breite B der beidseitig geschlossenen Längsnut 122. In dem in Figur 12 dargestellten Ausführungsbeispiel stimmt die Längserstreckung LR des Rundnutstempels 206 mit der Breite B der geplanten Längsnut 122 überein.

Die Vorrichtung 200 der Figur 12 zeigt zur Durchführung des Verschiebens einen in einer durch den Doppelpfeil 210 angeordneten Matrizenlängsrichtung der Matrize 202 wirkenden Pressstempel 212 und einen Pressstempel 216. Der Pressstempel 212 dient der Einformung der Drehmitnahmefläche 164 beim Einführen des Verbindungshalbzeugs 102 in die Matrize 202, der Pressstempel 216 dient der daran anschließenden Einformung der beidseitig geschlossenen Längsnut 122 und dem Auswerfen des Verbindungshalbzeugs 102 aus der Matrize 202. Mit Hilfe des Presstempels 216 und dem Rundnutstempel 206 kann in das Verbindungselementhalbzeug 102 mindestens eine beidseitig geschlossene Längsnut 122 durch Einprägen eingeformt werden. Hierzu wird im Wesentlichen der radial bewegliche Rundnutstempel 206 senkrecht in Richtung auf die Umfangsoberfläche des Verbindungshalbzeugs 102 zugestellt, bis der Rundnutstempel 206 in die Umfangsoberfläche des Verbindungshalbzeugs 102 in die gewünschte Tiefe von in diesem Fall 2,4 mm eintaucht. Bei Erreichen der gewünschten Tiefe wird diese gemäß Pfeil 208 auf das Verbindungshalbzeug 102 gerichtete Radialbewegung des Rundnutstempels 206 gestoppt. Dann beginnt der Pressstempel 216 das Verbindungshalbzeug 102 aus der Matrize 202 gemäß dem in Figur 12 rechts dargestellten Ende des Doppelpfeils 210 auszuschieben, um den bereits in das Verbindungselementhalbzeug 102 eingetauchten Rundnutstempel relativ zum Halbzeug 102 zu bewegen und auf diese Weise eine Längsnut in die Umfangsoberfläche des Halbzeugs 102 einzuformen. Die Längsnut weist dann eine Längserstreckung auf, die der Summe aus Umfang des Rundnutstempels 206 und der Länge der Verschiebung des Stempels 216 in die Matrize 202 hinein entspricht.

Figur 13 zeigt die Vorrichtung der Figur 12 in einer anderen Perspektive und unmittelbar vor dem Beginn des Ausschiebens des Halbzeuges 102 aus der Matrizenlängsöffnung 214 durch den Pressstempel 216.

Bei einer zweiten, nicht dargestellten Ausführungsform der erfindungsgemäßen Vorrichtung kann eine weitere, zweite Matrize mit einem in deren Matrizenlängsöffnung 214 wirkenden Pressstempel zur Einformung mindestens einer Drehmitnahmefläche 162 in das Verbindungselementhalbzeug 102 vorgesehen sein. Diese Ausführungsform zeichnet sich dadurch aus, dass jeweils in Verlängerung der beiden Matrizenlängsöffnungen 214 jeweils ein Pressstempel 212, 216 angeordnet ist, ein erster Pressstempel 212 zum Einformen der mindestens einen Drehmitnahmefläche 162 in das Verbindungselementhalbzeug 102 bei einem Einführen in die zweite Matrize, und ein zweiter Pressstempel 216 zum Einformen der mindestens einen beidseitig geschlossenen Längsnut 122 in das Verbindungselementhalbzeug 102 bei einem Einführen in die Matrize 202.

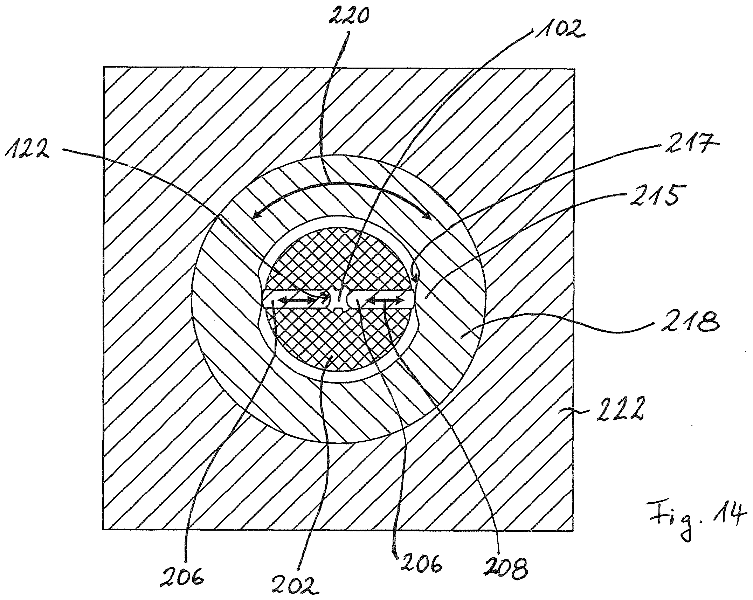

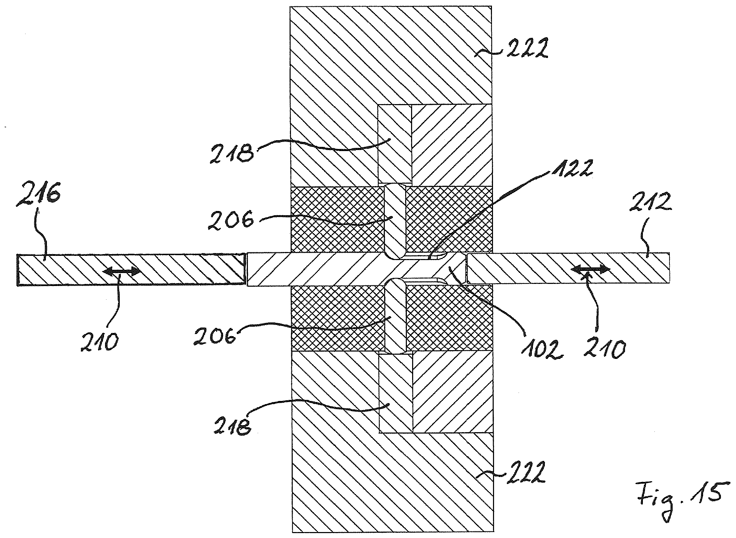

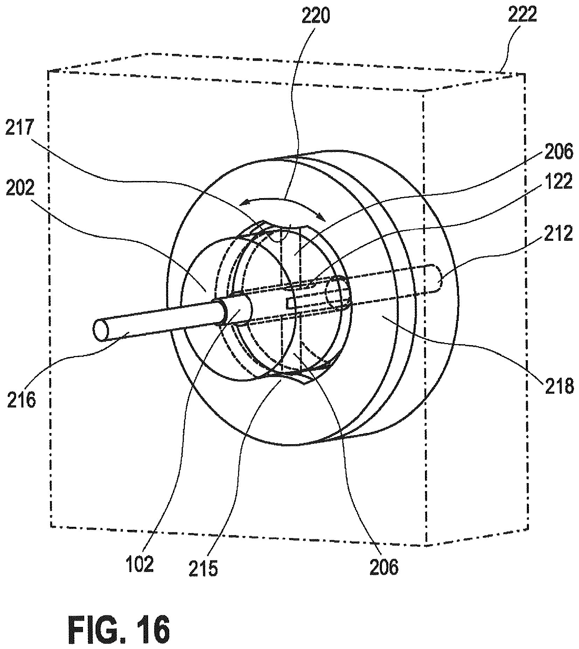

Eine dritte Ausführungsform ist in den Figuren 14-16 dargestellt. Figur 14 zeigt einen Querschnitt, Figur 15 zeigt einen Längsschnitt, und Figur 16 zeigt eine perspektivische Ansicht dieser Ausführungsform. Die Ausführungsform der Figuren 14-16 zeichnet sich dadurch aus, dass außerhalb der Matrize 202 und annähernd rechtwinklig zu der Matrizenlängsöffnung 214 mindestens ein Keil 215 angeordnet ist, der zum Einpressen der mindestens einen beidseitig geschlossenen Längsnut 122 in das Verbindungselementhalbzeug 102 auf den mindestens einen gemäß Doppelpfeil 208 radial beweglichen Umformkörper 206 drückt. Diese Ausführungsform zeichnet sich gemäß den Figuren 14-16 weiterhin dadurch aus, dass der mindestens eine Keil 215 als Innennockenfläche 217 in einer konzentrisch zur Matrize 202 in einem Lager 222 drehbar gelagerten Hülse 218 angearbeitet ist und durch Verdrehung der Hülse 218 gemäß Doppelpfeil 220 die Kraft zum Einformen der mindestens einen beidseitig geschlossenen Längsnut 122 auf den mindestens einen radial beweglichen Umformkörper 206 aufgebracht wird. Die Figuren 14-16 zeigen einen Zustand, in dem die Umformkörper 206 die beidseitig geschlossenen Längsnuten 122 eingeformt haben und ein Rückzug der Umformkörper 206 aus den Nuten 122 unmittelbar bevorsteht, indem die Hülse 218 gemäß Doppelpfeil 220 entsprechend verdreht wird, so dass die Nocken 217 außer Kontakt mit den den Nocken 217 zugewandten Enden der Umformkörper 206 geraten.

Eine weitere, nicht dargestellte vierte Ausführungsform der erfindungsgemäßen Vorrichtung bzw. des erfindungsgemäßen Verfahrens zeichnet sich dadurch aus, dass die Matrize 202 eine Innenkontur aufweist, welche mit mindestens einer geplanten Drehmitnahmefläche 162 des Verbindungselementes 100' korrespondiert und diese mindestens eine Drehmitnahmefläche 162 durch Einführen des Verbindungselementhalbzeugs 102 in die Matrize 202 unter Kraft in Richtung einer Längsachse 210 der Matrize 202 eingeformt wird und die mindestens eine beidseitig geschlossene Längsnut 122 durch radiales Zustellen des mindestens einen in der Matrize 202 beweglichen Umformkörpers 206 und folgender Axialbewegung in Richtung der Längsachse 210 der Matrize 202 eingeprägt wird. Diese Ausführungsform kann dadurch weitergebildet werden, dass das Einprägen der mindestens einen beidseitig geschlossene Längsnut 122 anschließend an das Einformen der mindestens einen Drehmitnahmefläche 162 erfolgt.

Das erfindungsgemäße Verfahren kann sich dadurch auszeichnen, dass das Einprägen der mindestens einen beidseitig geschlossenen Längsnut während des Einformens der mindestens einen Drehmitnahmefläche 162 erfolgt, vorzugsweise indem der mindestens eine radial bewegliche Umformkörper 206 einen bezogen auf eine Matrizenlängsachse 210 axialen Versatz aufweist gegenüber einem Vorderende von mindestens einem in der Matrize 202 angeordneten Umformelement 206 für die mindestens eine Drehmitnahmefläche 162.

Das erfindungsgemäße Verfahren kann sich weiterhin dadurch auszeichnen, dass das Einprägen der mindestens einen beidseitig geschlossenen Längsnut 122 nach Beendigung des Einformens der mindestens einen Drehmitnahmefläche 162 mit dem radialen Zustellen des mindestens einen beweglichen Umformkörpers 206 beginnt und durch ein Ausschieben des Verbindungselementhalbzeugs 102 aus der Matrizenlängsöffnung 214 unter einer axial wirkenden Kraft fortgesetzt und/oder beendet wird.

Das erfindungsgemäße Verfahren kann sich weiterhin dadurch auszeichnen, dass dass bei einem rohrförmigen, einen Rohrinnenhohlraum mit einem Rohrinnenquerschnitt aufweisendem Verbindungselementhalbzeug 102 im Bereich der mindestens einen geplanten Drehmitnahmefläche 162 und der mindestens einen geplanten beidseitig geschlossenen Längsnut 122 der Rohrinnenquerschnitt durch das Einbringen der mindestens einen Drehmitnahmefläche 162 verkleinert oder geschlossen wird, weiter bevorzugt oder alternativ wird der Rohrinnenquerschnitt durch vorheriges Einführen eines entlang seiner Längsachse mit Querschnittsänderungen profilierten Innenstiftes in das Verbindungselementhalbzeug 102 reduziert oder geschlossen.

Das erfindungsgemäße Verfahren kann sich weiterhin dadurch auszeichnen, dass die Matrize 202 in Längsrichtung 210 mindestens einmal geteilt ist und die Matrizenhälften bzw. - teile beim, bevorzugt unmittelbar vor dem, Auswerfen geringfügig im Verhältnis zu einem Durchmesser des Verbindungselementes 100, 100' beabstandet werden.

## Patentansprüche

1. Verfahren zur Herstellung eines mit einer Endfläche (106) versehenen stangen- oder rohrförmigen Verbindungselementes (100, 100`) aus einem Verbindungselementhalbzeug (102) aus Metall, insbesondere eines axialbeweglich in einer Werkzeugaufnahme eines Bohrhammers befestigten Einsteckendes eines Bohrers oder Meißels,
ein Verbindungselementhalbzeug (102) wird zur Verfügung gestellt,
**dadurch gekennzeichnet, dass** mindestens ein in Aussparungen (204) einer Matrize (202) geführter radial beweglicher Umformkörper (206) zum Einformen mindestens einer beidseitig geschlossenen Längsnut (122, 124) in das Verbindungselementhalbzeug (102) eine geringere Längserstreckung (LR) aufweist als eine geplante Länge (L) der Längsnut (122, 124) und das die Einformung der mindestens einen beidseitig geschlossenen Längsnut (122, 124) in das Verbindungselementhalbzeug (102) durch radiales Zustellen des mindestens einen Umformkörpers (206) und anschließendes axiales Verschieben des Verbindungselementhalbzeugs (102) in einer Matrizenlängsöffnung (214) der Matrize (202) vorgenommen wird.

2. Verfahren nach Anspruch 1,
**dadurch gekennzeichnet, dass** die Längserstreckung (LR) des mindestens einen radial beweglichen Umformkörpers (206) bevorzugt das ein- bis dreifache der Breite (B) der mindestens einen beidseitig geschlossenen Längsnut (122, 124) beträgt.

3. Verfahren nach Anspruch 1 oder 2,
**dadurch gekennzeichnet, dass** die Matrize (202) eine Innenkontur aufweist, welche mit mindestens einer geplanten Drehmitnahmefläche des Verbindungselementes (100, 100`) korrespondiert und diese mindestens eine Drehmitnahmefläche durch Einführen des Verbindungselementhalbzeugs (102) in die Matrize (202) unter Kraft in Richtung einer Längsachse (210) der Matrize (202) eingeformt wird und die mindestens eine beidseitig geschlossene Längsnut (122, 124) durch radiales Zustellen des mindestens einen in der Matrize (202) beweglichen Umformkörpers (206) und folgender Axialbewegung in Richtung der Längsachse (210) der Matrize (202) eingeprägt wird.

4. Verfahren nach Anspruch 3,
**dadurch gekennzeichnet, dass** das Einprägen der mindestens einen beidseitig geschlossenen Längsnut (122, 124) während des Einformens der mindestens einen Drehmitnahmefläche erfolgt, vorzugsweise indem der mindestens eine radial bewegliche Umformkörper (206) einen bezogen auf eine Matrizenlängsachse (210) axialen Versatz aufweist gegenüber einem Vorderende von mindestens einem in der Matrize (202) angeordneten Umformelement für die mindestens eine Drehmitnahmefläche.

5. Verfahren nach Anspruch 3,
**dadurch gekennzeichnet, dass** das Einprägen der mindestens einen beidseitig geschlossenen Längsnut (122, 124) nach Beendigung des Einformens der mindestens einen Drehmitnahmefläche mit dem radialen Zustellen des mindestens einen beweglichen Umformkörpers (206) beginnt und durch ein Ausschieben des Verbindungselementes (100, 100') aus der Matrizenlängsöffnung (214) unter einer axial wirkenden Kraft fortgesetzt und/oder beendet wird.

6. Verfahren nach einem der Ansprüche 3-5,
**dadurch gekennzeichnet, dass** bei einem rohrförmigen, einen Rohrinnenhohlraum mit einem Rohrinnenquerschnitt aufweisendem Verbindungselementhalbzeug (102) im Bereich der mindestens einen geplanten Drehmitnahmefläche und der mindestens einen geplanten beidseitig geschlossenen Längsnut (122, 124) der Rohrinnenquerschnitt durch das Einbringen der mindestens einen Drehmitnahmefläche verkleinert oder geschlossen wird, weiter bevorzugt oder alternativ wird der Rohrinnenquerschnitt durch vorheriges Einführen eines entlang seiner Längsachse (210) mit Querschnittsänderungen profilierten Innenstiftes in das Verbindungselementhalbzeug (102) reduziert oder geschlossen.

7. Verfahren nach einem der vorstehenden Ansprüche,
**dadurch gekennzeichnet, dass** die Matrize (202) in Längsrichtung mindestens einmal geteilt ist und die Matrizenhälften bzw. -teile beim, bevorzugt unmittelbar vor dem, Auswerfen geringfügig im Verhältnis zu einem Durchmesser des Verbindungselementes (100, 100') beabstandet werden.

8. Vorrichtung zur Fertigung eines Verbindungselementes (100, 100`) aus einem Verbindungselementhalbzeug (102), insbesondere eines axialbeweglich in einer Werkzeugaufnahme eines Bohrhammers befestigten Einsteckendes eines Bohrers oder Meißels, aufweisend
- eine Matrize (202), **gekennzeichnet durch**:
- mindestens ein in Aussparungen (204) der Matrize (202) geführten radial beweglichen Umformkörper (206) zum Einformen mindestens einer beidseitig geschlossenen Längsnut (122, 124) in das Verbindungselementhalbzeug (102), welcher Umformkörper (206) eine geringere Längserstreckung (LR) aufweist als eine geplante Länge (L) der Längsnut (122, 124), und
- einen in einer Matrizenlängsrichtung der Matrize (202) wirkenden Pressstempel (212, 216), mittels welchem das Verbindungselementhalbzeug (102) in der Matrize (202) verschiebbar ist.

9. Vorrichtung nach Anspruch 8, **gekennzeichnet durch**:
eine weitere Matrize (202) und einen in einer Matrizenlängsöffnung (214) der Matrize (202) und/oder der weiteren Matrize (202) wirkenden Pressstempel (212,216) zur Einformung mindestens einer Drehmitnahmefläche in das Verbindungselementhalbzeug (102).

10. Vorrichtung nach Anspruch 9,
**dadurch gekennzeichnet, dass** beidseitig in Verlängerung der Matrizenlängsöffnung (214) jeweils ein Pressstempel (212, 216) angeordnet ist, ein erster Pressstempel (212, 216) zum Einformen der mindestens einen Drehmitnahmefläche in das Verbindungselementhalbzeug (102) bei einem Einführen in die Matrize (202), und ein zweiter Pressstempel (212, 216) auf einer dem ersten Pressstempel (212, 216) gegenüberliegenden Auswerferseite zum Einformen der mindestens einen beidseitig geschlossenen Längsnut (122, 124) in das Verbindungselementhalbzeug (102) bei einem Ausschieben aus der Matrize (202).

11. Vorrichtung nach einem der Ansprüche 8-10,
**dadurch gekennzeichnet, dass** außerhalb der Matrize (202) und annähernd rechtwinklig zu der Matrizenlängsöffnung (214) mindestens ein Keil (215) angeordnet ist, der zum Einpressen der mindestens einen beidseitig geschlossenen Längsnut (122, 124) in das Verbindungselementhalbzeug (102) auf den mindestens einen radial beweglichen Umformkörper (206) drückt.

12. Vorrichtung nach Anspruch 11,
**dadurch gekennzeichnet, dass** der mindestens eine Keil (215) als Innennockenfläche (217) in einer konzentrisch zur Matrize (202) drehbar gelagerten Hülse (218) angearbeitet ist und durch Verdrehung der Hülse (218) die Kraft zum Einformen der mindestens einen beidseitig geschlossenen Längsnut (122, 124) auf den mindestens einen radial beweglichen Umformkörper (206) aufgebracht wird.

## Claims

1. A method for producing a rod- or pipe-shaped connecting element (100, 100`), which has an end face (106), from a semi-finished connecting element (102) made of metal, in particular, a drill or chisel insertion end which is secured in an axially movable manner in a chuck of a hammer drill,
a semi-finished connecting element (102) is provided,
**characterized in that** at least one radially movable forming body (206) guided in recesses (204) of a die (202) for forming at least one longitudinal groove (122, 124) closed on both sides in the semi-finished connecting element (102) has a smaller longitudinal extension (LR) than a planned length (L) of the longitudinal groove (122, 124) and that the forming of the at least one longitudinal groove (122, 124) closed on both sides in the semi-finished connecting element (102) is performed by radially applying the at least one forming body (206) and subsequent axial shifting of the semi-finished connecting element (102) in a longitudinal die opening (214) of the die (202).

2. The method according to claim 1,
**characterized in that** the longitudinal extension (LR) of the at least one radially movable forming body (206) has preferably one to three times the width (B) of the at least one longitudinal groove (122, 124) closed on both sides.

3. The method according to claim 1 or 2,
**characterized in that** the die (202) has an interior contour corresponding to the at least one rotary entrainment surface of connecting element (100, 100`) and that this at least one rotary entrainment surface is formed by forced insertion of the semi-finished connecting element (102) in the die (202) in the direction of a longitudinal axis (210) of the die (202) and that the at least one longitudinal groove (122, 124) closed on both sides is embossed by means of radially applying the at least one forming body (206) movable in the die (202) and subsequent axial movement in the direction of the longitudinal axis (210) of the die (202).

4. The method according to claim 3,
**characterized in that** the embossing of the at least one longitudinal groove (122, 124) closed on both sides is performed during the forming of the at least one rotary entrainment surface, preferably by the at least one radially movable forming body (206) being axially offset relative to a longitudinal axis of the die (210) from a front end of at least one forming element arranged in the die (202) for the at least one rotary entrainment surface.

5. The method according to claim 3,
**characterized in that** the embossing of the at least one longitudinal groove (122, 124) closed on both sides begins upon completion of the forming of the at least one rotary entrainment surface by radially applying the at least one movable forming body (206) and is continued and/or completed by expelling the connecting element (100, 100') from the longitudinal die opening (214) under an axially acting force.

6. The method according to any of claims 3-5,
**characterized in that** in a pipe-shaped semi-finished connecting element (102) having an interior pipe cavity with an interior pipe diameter in the area of the at least one planned rotary entrainment surface and the at least one planned longitudinal groove (122, 124) closed on both sides, the interior pipe diameter is reduced or closed by applying the at least one rotary entrainment surface, further preferably or alternatively the interior pipe diameter is reduced or closed by prior insertion in the semi-finished connecting element (102) of an interior pin profiled along its longitudinal axis (210) by changes in its cross-section.

7. The method according to one of the preceding claims,
**characterized in that** the die (202) is divided at least once in its longitudinal direction and that the die halves and/or parts are at a slight distance from each other proportionate to a diameter of the connecting element (100, 100`) during, preferably immediately before, ejection.

8. The apparatus for producing a connecting element (100, 100`) from a semi-finished connecting element (102), in particular a drill or chisel insertion end secured in an axially movable manner in a chuck of a hammer drill, comprising:
- a die (202), **characterized by**
- at least one radially movable forming body (206) guided in recesses (204) of the die (202) for forming at least one longitudinal groove (122, 124) closed on both sides in the semi-finished connecting element (102), which forming body (206) has a smaller longitudinal extension (LR) than a planned length (L) of the longitudinal groove (122, 124), and
- an extrusion punch (212, 216), acting in a longitudinal die direction of the die (202) by means of which semi-finished connecting element (102) is slidable in the die (202).

9. The apparatus according to claim 8, **characterized in**:
another die (202) and an extrusion punch (212, 216) acting in a longitudinal die opening (214) of the die (202) and/or the additional die (202) for forming at least one rotary entrainment surface in the semi-finished connecting element (102).

10. The apparatus according to claim 9,
**characterized in that** on both sides in extension of the longitudinal die opening (214) an extrusion punch (212, 216) each is arranged; a first extrusion punch (212, 216) for forming the at least one rotary entrainment surface in the semi-finished connecting element (102) upon insertion in the die (202), and a second extrusion punch (212, 216) on an ejection side located opposite the first extrusion punch (212, 216) for forming the at least one longitudinal groove (122, 124) closed on both sides in the semi-finished connecting element (102) upon expulsion from the die (202).

11. The apparatus according to any of claims 8 to 10,
**characterized in that** outside of the die (202) and approximately perpendicular to the longitudinal die opening (214) at least one wedge (215) is arranged that presses on the at least one radially movable forming body (206) for embossing the at least one longitudinal groove (122, 124) closed on both sides on the semi-finished connecting element (102).

12. The apparatus according to claim 11,
**characterized in that** the at least one wedge (215) is attached as an interior cam surface (217) in a bushing (218) rotatably supported concentrically to the die (202) and, by rotating the bushing (218), the force for forming the at least one longitudinal groove (122, 124) closed on both sides is applied to the at least one radially movable forming body (206).

## Revendications

1. Procédé de fabrication d'un élément de raccordement (100, 100') en forme de tige ou de tuyau pourvu d'une surface d'extrémité (106) à partir d'un élément de raccordement semi-fini (102) en métal, en particulier d'une extrémité d'enfichage d'une perceuse ou d'un burin fixée de manière mobile axialement dans un porte-outil d'un perforateur,
un élément de raccordement semi-fini (102) est mis à disposition,
**caractérisé en ce qu'**au moins un corps de façonnage (206) mobile radialement, guidé dans des évidements (204) d'une matrice (202), destiné à former au moins une rainure longitudinale (122, 124) fermée des deux côtés dans l'élément de liaison semi-fini (102), présente une extension longitudinale (LR) plus courte qu'une longueur prévue (L) de la rainure longitudinale (122, 124) et la formation de l'au moins une rainure longitudinale (122, 124) fermée des deux côtés dans l'élément de liaison semi-fini (102) est réalisée en faisant avancer radialement l'au moins un corps de façonnage (206), puis en coulissant axialement l'élément de liaison semi-fini (102) dans une ouverture longitudinale de matrice (214) de la matrice (202).

2. Procédé selon la revendication 1,
**caractérisé en ce que** l'extension longitudinale (LR) de l'au moins un corps de façonnage (206) mobile radialement est de manière préférée égale à une à trois fois la largeur (B) de l'au moins une rainure longitudinale (122, 124) fermée des deux côtés.

3. Procédé selon la revendication 1 ou 2,
**caractérisé en ce que** la matrice (202) présente un contour intérieur qui correspond à au moins une surface d'entraînement en rotation prévue de l'élément de liaison (100, 100') et ladite au moins une surface d'entraînement en rotation est formée en introduisant l'élément de liaison semi-fini (102) dans la matrice (202) sous l'effet d'une force dans la direction d'un axe longitudinal (210) de la matrice (202) et l'au moins une rainure longitudinale (122, 124) fermée des deux côtés est estampée en avançant radialement l'au moins un corps de façonnage (206) mobile dans la matrice (202) et par un déplacement axial consécutif en direction de l'axe longitudinal (210) de la matrice (202).

4. Procédé selon la revendication 3,
**caractérisé en ce que** l'estampage de l'au moins une rainure longitudinale (122, 124) fermée des deux côtés est effectué pendant le formage de l'au moins une surface d'entraînement en rotation, de préférence **en ce que** l'au moins un corps de façonnage (206) mobile radialement présente un décalage axial par rapport à un axe longitudinal de matrice (210) par rapport à une extrémité avant d'au moins un élément de façonnage disposé dans la matrice (202) pour l'au moins une surface d'entraînement en rotation.

5. Procédé selon la revendication 3,
**caractérisé en ce que** l'estampage de l'au moins une rainure longitudinale (122, 124) fermée des deux côtés commence par l'avancement radial de l'au moins un corps de façonnage (206) mobile après la fin du formage de l'au moins une surface d'entraînement en rotation et se poursuit avec et/ou se termine par un glissement de l'élément de raccordement (100, 100') hors de l'ouverture longitudinale de matrice (214) sous l'effet d'une force agissant axialement.

6. Procédé selon l'une quelconque des revendications 3-5,
**caractérisé en ce que**, dans le cas d'un élément de raccordement semi-fini (102) tubulaire présentant une cavité intérieure de tube avec une section transversale intérieure de tube dans la zone de l'au moins une surface d'entraînement en rotation prévue et de l'au moins une rainure longitudinale (122, 124) fermée des deux côtés prévue, la section transversale intérieure de tube est réduite ou fermée par l'introduction de l'au moins une surface d'entraînement en rotation, de manière davantage préférée ou en variante, la section transversale intérieure de tube est réduite ou fermée par l'introduction préalable d'une broche intérieure profilée avec des changements de section transversale le long de son axe longitudinal (210) dans l'élément de raccordement semi-fini (102).

7. Procédé selon l'une quelconque des revendications précédentes,
**caractérisé en ce que** la matrice (202) est divisée au moins une fois dans la direction longitudinale et les moitiés ou parties de matrice sont légèrement espacées par rapport à un diamètre de l'élément de raccordement (100, 100') pendant, de manière préférée directement avant, l'éjection.

8. Dispositif de production d'un élément de raccordement (100, 100') à partir d'un élément de raccordement semi-fini (102), en particulier d'une extrémité d'enfichage d'une perceuse ou d'un burin fixée de manière mobile axialement dans un porte-outil d'un perforateur, présentant
- une matrice (202), **caractérisé par** :
- au moins un corps de façonnage (206) mobile radialement guidé dans des évidements (204) de la matrice (202), destiné à former au moins une rainure longitudinale (122, 124) fermée des deux côtés dans l'élément de raccordement semi-fini (102), lequel corps de façonnage (206) présente une extension longitudinale (LR) inférieure à une longueur prévue (L) de la rainure longitudinale (122, 124), et
- un chasse-piston (212, 216) agissant dans une direction longitudinale de matrice de la matrice (202), au moyen duquel l'élément de raccordement semi-fini (102) peut être coulissé dans la matrice (202).

9. Dispositif selon la revendication 8, **caractérisé par** :
une autre matrice (202) et un chasse-piston (212, 216), agissant dans une ouverture longitudinale de matrice (214) de la matrice (202) et/ou de l'autre matrice (202), destiné à former au moins une surface d'entraînement en rotation dans l'élément de raccordement semi-fini (102).

10. Dispositif selon la revendication 9,
**caractérisé en ce que** respectivement un chasse-piston (212, 216) est disposé de part et d'autre dans le prolongement de l'ouverture longitudinale de matrice (214), un premier chasse-piston (212, 216) destiné à former l'au moins une surface d'entraînement en rotation dans l'élément de raccordement semi-fini (102) lors d'une introduction dans la matrice (202), et un deuxième chasse-piston (212, 216) sur un côté d'éjecteur faisant face au premier chasse-piston (212, 216), destiné à former l'au moins une rainure longitudinale (122, 124) fermée des deux côtés dans l'élément de raccordement semi-fini (102) lors d'un glissement hors de la matrice (202).

11. Dispositif selon l'une quelconque des revendications 8-10,
**caractérisé en ce qu'**est disposée, à l'extérieur de la matrice (202) et approximativement de manière perpendiculaire à l'ouverture longitudinale de matrice (214), au moins une cale (215), qui exerce une pression sur l'au moins un corps de façonnage (206) mobile radialement pour enfoncer l'au moins une rainure longitudinale (122, 124) fermée des deux côtés dans l'élément de raccordement semi-fini (102).

12. Procédé selon la revendication 11,
**caractérisé en ce que** l'au moins une cale (215) est usinée comme surface de came intérieure (217) dans un manchon (218) monté de manière à pouvoir tourner de manière concentrique par rapport à la matrice (202) et grâce à la rotation du manchon (218), la force destinée à former l'au moins une rainure longitudinale (122, 124) fermée des deux côtés est appliquée sur l'au moins un corps de façonnage (206) mobile radialement.
